# EUROPÄISCHE PATENTANMELDUNG

(11) **EP 2 055 257 A2**
(43) Veröffentlichungstag der Anmeldung: **06.05.2009**
(21) Anmeldenummer: 08018939.2
(22) Anmeldetag: 30.10.2008
(51) Int. Cl.: A61C 1/07, A61C 5/06

(54) **Schwingender Applikationspinsel**

(30) Priorität: 02.11.2007 DE 102007052442
(71) Anmelder: VOCO GmbH, 27472 Cuxhaven (DE)
(72) Erfinder: Gerkensmeier, Thorsten, Dr., 27476 Cuxhaven (DE); Plaumann, Manfred Thomas, 27472 Cuxhaven (DE)

(57) **Zusammenfassung**

Die Erfindung betrifft einen schwingenden Applikationspinsel zum Auftragen flüssiger, dentaler Materielien an Zahnhartsubstanz, der in einem Schallfrequenzbereich von 20 bis 10 000 Herz, vorzugsweise in einem Bereich von 80 bis 500 Herz, schwingt.

## Beschreibung

Die vorliegende Erfindung betrifft einen schwingenden Applikationspinsel zum Auftragen flüssiger dentaler Materialien an Zahnhartsubstanz sowie die Verwendung eines solchen Gerätes zum Herstellen zahnärztlicher Präparationen.

In der modernen Zahnmedizin werden auf vielfältige Weise flüssige, niedrigviskose Materialien am Zahn eingesetzt. Beispiele hierfür sind Zahnlacke zur Versiegelung, Kavitätenreiniger, Fluoridlacke zur Kariesprophylaxe und zur Desensibilisierung sowie dentale Adhäsivmaterialien.

Insbesondere letztgenannte Materialien sind äußerst empfindlich bezüglich ihrer Anwendung. Der Grund für diese Empfindlichkeit liegt in der strukturellen Besonderheit und morphologischen Komplexität ihres Einsatzgebietes.

Das Dentin des menschlichen Zahns ist von zahlreichen Dentinkanälchen, auch Tubuli genannt, durchsetzt. Sie verlaufen von der Schmelz-Dentin Grenze zur Pulpa, wobei die Anzahl der Kanälchen im pulpanahen Bereich bei ca. 60 000/mm² und an der Schmelz-Dentin Grenze bei ca. 20 000/mm² liegt. Entsprechend der volumenmäßig unterschiedlichen Verteilung der Kanälchen über das gesamte Dentin nimmt der Durchmesser der Tubuli von ca. 1 µm an der Peripherie auf ca. 3 µm zur Pulpa hin zu. Der Durchmesser der Kanälchen ändert sich zudem mit dem Alter.

Die Kanälchen, die untereinander noch durch zahlreiche Verzweigungen verbunden sind, enthalten eine Gewebeflüssigkeit, den so genannten Dentinliquor und die Odontoblastenfortsätze, die das gesamte Dentin durchziehen und bis zu 5.000 µm lang werden können. Die Fortsätze erzeugen eine kollagene Matrix und scheiden diese in die Kanälchen aus. Die Anzahl und der Durchmesser der Odontoblastenfortsätze nehmen proportional zur Entfernung von der Pulpa ab.

Aufgrund eines konstanten, hydrostatischen Drucks in der Pulpa von 20 bis 30 mm Hg wird ein Flüssigkeits-Druckgradient in den Tubuli aufgebaut, der von innen nach außen gerichtet ist. Dieser Umstand bewirkt die hohe Hydrophilie des Dentins, das sich niemals vollständig trocknen lässt.

Wird Dentin mit rotierenden Instrumenten im Zuge einer Zahnbehandlung präpariert, bildet sich auf der Dentinoberfläche eine so genannte "Schmierschicht" (smear layer). Diese "Schmierschicht" besteht aus Hydroxylapatitkristallen, denaturiertem Kollagen, Speichelproteinen, Bakterien sowie ggf. Blut. Die Schicht verbindet sich mit dem darunter liegenden Dentin so fest, dass ein Abwischen oder Abspülen mit Wasserspray nicht möglich ist. Die Schicht weist eine Dicke von 1 bis 5 µm auf und dringt in unterschiedlichen Ausmaßen als Schmierstopfen in die Tubuli ein und versiegelt somit flächig das Dentin durch eine fast vollständige Reduktion der Permeabilität.

Eine Entfernung der Schmierschicht ist ausschließlich auf chemischem Weg, durch Oberflächenbehandlung des Dentins mit Säure oder geeigneten Komplexbildnern, möglich. Wird die Schmierschicht chemisch säuremodifiziert, wird eine Steigerung des Flüssigkeitsstromes nach außen bewirkt.

Zusammenfassend kann somit festgestellt werden, dass das Dentin ein Gewebe mit instrinsischer, hydrophiler Flüssigkeit, die nach außen drückt und niedriger Oberflächenenergie ist, das nach zahnärztlicher Präparation mit einer äußerst heterogen zusammengesetzten Schicht versiegelt ist.

Die strukturelle und chemische Zusammensetzung einer solchen Oberfläche lässt eine mikromechanische Haftung mit einem hydrophoben Kompositmaterial nicht zu. Aus diesem Grund werden besonders formulierte Adhäsivmaterialien eingesetzt, um sicherzustellen, dass ein beständiger und fester Verbund zwischen dem zahnärztlichen Füllungsmaterial und der Zahnhartsubstanz aufgebaut wird.

Stand der Technik sind heute selbstkonditionierende, selbstprimende Ein-Flaschen-Adhäsive, die in einem Schritt angewendet werden. Mit der Entwicklung dieser Systeme wurden die zuvor notwendigen Schritte der Konditionierung, des Primens und der Applikation des Adhäsivs vereinfacht. Untersuchungen haben gezeigt, dass Haftung nach 4 Schritten erzielt wird:
1. (partielle) Auflösung oder (partielle) Präzipitation der Schmierschicht und (partielle) Demineralisation des Dentins
2. Benetzung der freiliegenden Kollagenfasern mit hydrophilen Monomeren
3. Infiltration des Kollagengeflechts und der Tubuli mit Monomeren
4. Polymerisation der Haftverbundschicht

Da jeder einzelne Schritt von wesentlicher Bedeutung für den Erhalt einer beständigen Haftkraft ist, kommt der Applikation des Adhäsivs eine besondere Bedeutung zu.

Stand der Technik ist die Anwendung des Adhäsivs mit einem Micro-Brush-Applikator. Das Adhäsiv wird mit dem Bürstchen für 20 bis 30 Sekunden in das Dentin manuell "eingerieben" oder "einmassiert". Das Adhäsiv muss lange genug in die präparierte Zahnoberfläche "eingerieben" und in Bewegung gehalten werden, um zu verhindern, dass die sauren Zusammensetzungen zu schnell neutralisieren und ihre Wirksamkeit verlieren. Gleichzeitig wird durch das "Einreiben" die Penetration des Bondings in das Dentin beschleunigt.

Es liegt auf der Hand, dass diese manuelle Tätigkeit je nach Kavitätenkonfiguration von unterschiedlichen Anwendern auch unterschiedlich durchgeführt wird, so dass in der Regel kaum reproduzierbare klinische Ergebnisse erzielt werden. Überdies ist ein Applikationsschritt in der zahnärztlichen Praxis mit 20 bis 30 Sekunden sehr lang.

Aufgabe der vorliegenden Erfindung war es daher, die Applikation eines dentalen Adhäsivmaterials so zu gestalten, dass besser reproduzierbare klinische Ergebnisse erzielt werden. Darüber hinaus sollte durch die Applikation des dentalen Adhäsivs höhere Haftkräfte zwischen der Zahnhartsubstanz und dem Restaurationsmaterial erreicht werden. Zudem sollte die Applikationsdauer des dentalen Bondings reduziert werden.

Überraschenderweise hat sich gezeigt, dass diese Aufgaben gelöst werden können durch einen vibrierenden (schwingenden) Applikationspinsel zum Auftragen dentaler Adhäsivmaterialien, der in einem Schallfrequenzbereich von 20 bis 10 000 Herz, bevorzugt in einem Bereich von 80 bis 500 Herz, schwingt.

Der erfindungsgemäße schwingende Applikationspinsel setzt sich aus einem Handstück und einem austauschbaren Applikationskopf zusammen.

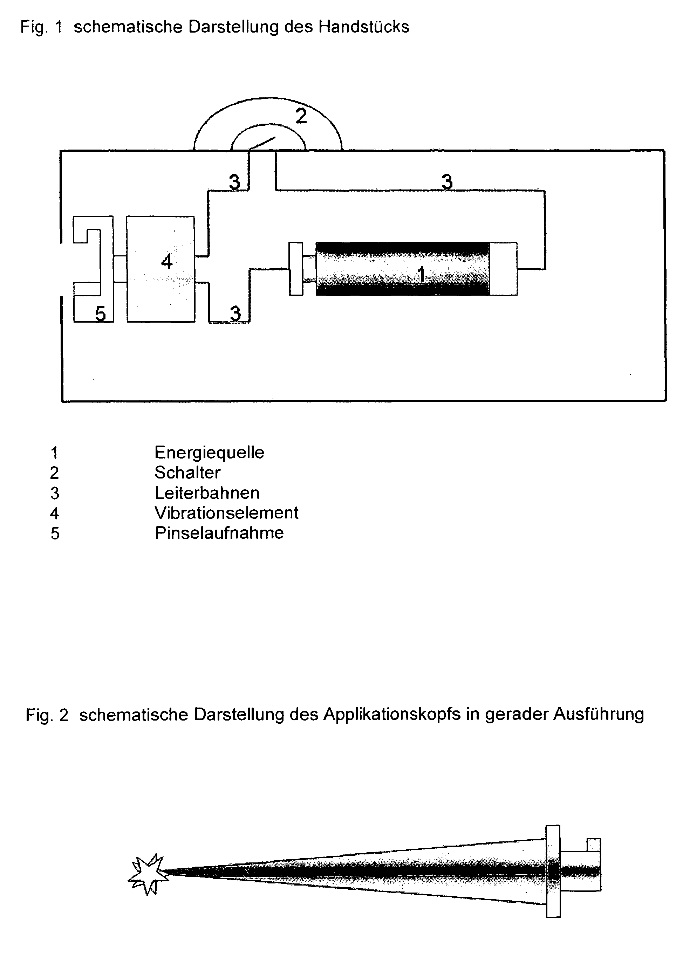

Figur 1 zeigt eine schematische Darstellung des Handstücks. Das Handstück sollte, in Form und Größe einem Stift (beispielsweise einem Bleistift) ähnlich, mit Daumen, Zeige- und

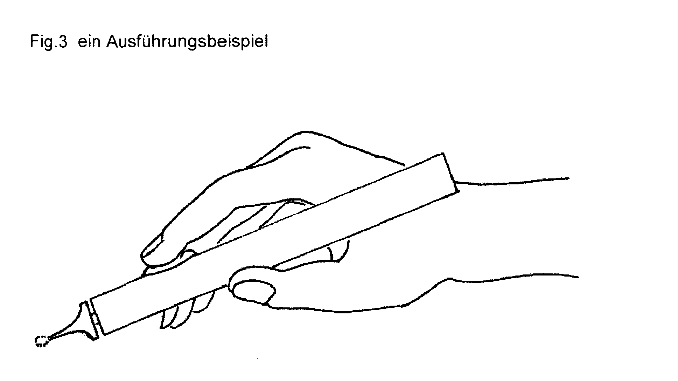

Ringfinger gehalten werden können, leicht mit einer Hand zu bedienen sein und gut in der Hand liegen (siehe Figur 3). Als Energiequelle können externe Stromquellen dienen. Batterien, Akkumulatoren (1) oder Ähnliches sind bevorzugt, da sie ein kabelfreies Arbeiten erlauben. Die Tasteneinheit (2) kann ein einfacher Berührungskontakt sein, der für die Dauer des Kontakts die Vibrationseinheit aktiviert oder auch ein Ein/Aus-Schalter. Das Vibrationselement (4) kann auf Piezotechnologie basieren. Die Pinselaufnahme (5) kann eine auf Friktion beruhende Steckverbindung für den Einwegpinsel sein. Figur 2 zeigt eine schematische Darstellung der Applikationspinselspitze in gerader Ausführung. Anstelle einer einfachen Steckverbindung sind auch Bajonett-, Schraub- oder Klickverschlüsse anwendbar. Der Pinsel kann auch gekrümmt ausgeführt sein, um schwieriger zugängliche Stellen im Patientenmund leichter zu erreichen. Aus Hygienegründen bei der Anwendung im zahnmedizinischen Bereich ist der Applikationspinsel als Einwegartikel zu gebrauchen. Der Applikationskopf besteht aus einem weichen Material zur Aufnahme von Flüssigkeit, beispielsweise aus Mikrofasern, Schaumstoff, Filz oder ähnlichen saugfähigen Materialien. Der Pinselkopf sollte nicht weiter als 5 cm von der Griffauflage (Handstück) entfernt sein. Während des Pinseleinsatzes schwingt der Pinselkopf schnell hin und her.

Zahlreiche Schwingungsvorrichtungen sind aus dem Stand der Technik bekannt.

Die DE 69721313 beschreibt eine Vorrichtung zur Zahnsteinentfernung mittels orbitalen Schwingungen. Die Vorrichtung umfasst ein Büschel Borsten einer Zahnbürste, die mit Hilfe von Ultraschall in eine orbitale Vibration versetzt wird, um das leichte Eindringen der Borsten in die Zahnzwischenräume zu ermöglichen und um hartnäckige Zahnbelagsbakterien herauszulösen und zu beseitigen.

Die DE 69524368 beansprucht eine Dentalspitze, die eine Ultraschallschwingung verwendet, die Zahnstein und andere Beläge vom Zahn entfernen kann.

Die EP 1698301 betrifft eine zahnärztliche Vorrichtung zur Behandlung mittels Ultraschall, beispielsweise zur Zahnsteinentfernung, wobei die Vorrichtung einen Transformator enthält, der eine elektrische Eingangsspannung in eine höhere elektrische Ausgangsspannung umwandelt.

Die DE 29810915 beschreibt eine ultraschallbetriebene Bürste zum mechanischen Entfernen kariös erweichter Zahnsubstanz.

Die Druckschriften DE 1632390, DE 69325373, US 5071348, US 5138733 sowie US 5123841 betreffen Ultraschallzahnbürsten.

Die DE 102005021261 beschreibt ein Verfahren und eine Vorrichtung zur Zahnreinigung unter Einwirkung von Ultraschall. Hierbei wird der Ultraschall durch Wasser in der Mundhöhle auf die Zähne geleitet. Die Applikation des Ultraschalls erfolgt auf der Außenseite des Mundraums.

Ein weiteres Dentalinstrument zur Schall- oder Ultraschallbehandlung im Zuge der Zahnreinigung, der Parodontal-Behandlung oder der Paradontal-Prophylaxe wird in der DE 19916156 vorgeschlagen.

Die DE 60125876 betrifft einen Ultraschalleinsatz.

Die DE 3409543 bezieht sich auf ein Ultraschallgerät zum Reinigen, Polieren und/oder Schleifen, das an seinem Applikationskopf ein Bündel zusammengefasster Einzeldrähte aus Stahl aufweist.

Die DE 4109988 betrifft eine Extraktionszange, die einen Ultraschallwandler umfasst, wobei die Exstirpation der Zähne unter Ultraschall erfolgt

Die Patentschrift AT 345441 beschreibt einen schwingenden zahnärztlichen Stopfer zum Verdichten von Amalgammassen.

Die Schriften DE 19541032 und DE 102005058879 schlagen schallaktivierbare Dentalinstrumente zur Kavitätenbearbeitung vor.

Die DE 4447667 beschreibt ein Ultraschallhandstück mit einer oszillierenden Arbeitsspitze zur abtragenden Behandlung natürlicher Hartgewebe.

Die DE 19916160 betrifft ein Ultraschallhandstück zur sicheren Handhabung im Mund eines Patienten.

In der DE 4032505 wird die Verwendung von hochgefüllten dentalen Füllungsmaterialien zur Befestigung von Inlays, Onlays, Verblendschalen und dergleichen mittels hochfrequenter Vibrationen beansprucht. Die dentalen, pastösen Massen dieser Patentschrift sind dadurch gekennzeichnet, dass ihr Füllstoffanteil so hoch ist, dass sie für den vorgesehenen Verwendungszweck aufgrund ihrer hohen Viskosität nicht einsetzbar sind und durch Einwirkung einer Schwingung im Frequenzbereich von 20 Hz und 20 MHz verflüssigt werden können, dass sie bestimmungsgemäß eingesetzt werden können.

Ähnliches beschreibt die US 4219619. Hier wird ein schwingendes Instrument zum Einsetzen von Kronen und Brücken, Teilprothesen, Inlays und Onlays beschrieben. Das Gerät arbeitet im relativ niederfrequenten Bereich von 20 bis 100 Hz. Mittels des Übertragungsweges "schwingendes Instrument - Bissregistrat - Krone" wird die Schwingungsenergie auf den Befestigungszement übertragen, der sich dabei verflüssigt. Die Viskosität des Zements wird somit herabgesetzt, so dass sich der Zement unter dem Zahnersatz leichter verteilen kann.

Die DE 10001513 beschreibt ein Austragegerät, das in einem Vorratsbehälter eine zähpastöse Zahnfüllmasse enthält und eine Düse umfasst, aus der die Füllmasse austritt, wobei die Düse bei Austritt der Masse durch eine Schallquelle, insbesondere durch eine Ultraschallquelle, in Schwingung versetzt wird. Durch diese Maßnahme soll das pastöse Füllungsmaterial besser fließfähig werden und problemlos bis auf den Grund der zu füllenden Kavität gebracht werden.

Keine der Patentschriften beschreibt einen schwingenden Applikationspinsel, der in einem Schallfrequenzbereich von 20 bis 10 000 Herz, bevorzugt in einem Bereich von 80 bis 500 Herz, schwingt, zum Auftragen flüssiger, dentaler Materialien an Zahnhartsubstanz, insbesondere zum Auftragen dentaler Adhäsivmaterialien. Keine der Patentschriften legt einen schwingenden Applikationspinsel, der in einem Schallfrequenzbereich von 20 bis 10 000 Herz, bevorzugt in einem Bereich von 80 bis 500 Herz, schwingt, zum Auftragen flüssiger dentaler Materialien an Zahnhartsubstanz, insbesondere zum Auftragen dentaler Adhäsivmaterialien, nahe.

Der Vibrationspinsel soll ausdrücklich keine besonderen abrasiven Eigenschaften haben.

Wird mit dem schwingenden Applikationspinsel ein Adhäsiv auf die Zahnoberfläche einer Kavität aufgetragen, so übernimmt bzw. unterstützt die Schwingung des Pinselkopfes die Einarbeitung des Adhäsivmaterials in die oberen Dentinschichten. Die Versuchsergebnisse aus den unteren Beispielen legen nahe, dass durch den maschinellen Auftrag das Adhäsiv möglicherweise tiefer und gleichmäßiger in die Dentinstrukturen eingearbeitet werden kann. Weiterhin wird das Adhäsiv wahrscheinlich intensiver mit dem Dentinliquor vermischt und somit die Benetzbarkeit des Substrats erheblich verbessert. Dadurch können verkürzte Bearbeitungszeiten und verbesserte Haftwerte erreicht werden. Zusätzlich verringert die Vibration ganz offensichtlich die Blasenbildung und führt somit zu homogeneren Bondingschichten. Unterschiedliche Einarbeitungstechniken und Einarbeitungsintensitäten, insbesondere in schwer zugänglichen Kavitäten, wie sie bei der manuellen Verarbeitung gängig sind und die damit schwankende Qualität des adhäsiven Verbundes können nun reduziert werden.

Die Ergebnisse unserer Testreihen zeigen
a.) dass der maschinelle Auftrag des Adhäsivs durch Einsatz des Schwingungspinsels innerhalb unserer Testreihen die höchsten Haftwerte liefert.
b.) dass die Standardabweichung innerhalb einer Testreihe beim Schwingungspinsel am geringsten ist.
c.) dass die Abweichung vom Mittelwert der Ergebnisse der Prüfer 1, 2 und 3 beim Schwingungspinsel deutlich geringer sind als bei dem Einweg- und Mikropinsel.
d.) dass eine Reduzierung der Anwendungszeit auf die Hälfte (von 20 auf 10 Sekunden) möglich erscheint.

Weitere Untersuchungen konnten zeigen, dass der schwingende Applikationspinsel ebenfalls hervorragend geeignet ist, andere niedrigviskose Materialien wie Zahnlacke zur Versiegelung, Kavitätenreiniger sowie Fluoridlacke zur Kariesprophylaxe und zur Desensibilisierung erkrankter Zähne auf Zahnoberflächen aufzutragen.

### Beispiele

Die erfindungsgemäßen Verbesserungen entsprechend den gestellten Aufgaben lassen sich durch geeignete Testanordnungen nachweisen.

Es ist bekannt, dass aktuelle dentale Einflaschen-Adhäsive erheblich bessere Haftwerte insbesondere auf Dentin erzielen, wenn das Haftmittel durch manuelle Einarbeitung mit einem Pinsel ca. 20 sec. lang aufgetragen und eingearbeitet wird.

Um den Einfluss der Einarbeitung in das Dentin offen zu legen, wurden Haftversuche mit dem System Adhäsiv/Komposit Futurabond NR/Grandio (von VOCO) an Rinderdentin durchgeführt. Hierfür wurden gereinigte, vom Schmelz befreite Rinderzähne in Methylmethacrylat einpolymerisiert und mit einer Diamantsäge mittig geteilt. Die zylindrische Schnittfläche wurde schließlich auf feuchtem Schleifpapier der Körnung 1000 poliert und gewässert. Bis zur weiteren Verarbeitung wird das Dentin feucht gehalten.

Als Applikationshilfen werden ein Einwegpinsel mit langen Borsten (ca. 20 mm), ein Mikropinsel und der erfindungsgemäße schwingende Applikationspinsel mit austauschbarem Kopf eingesetzt.

Der Mikropinsel besteht aus einem konischen Schaft in Form eines Floretts, der an der Spitze eine Flockkugel, bestehend aus Nylon, aufweist. Der Schaft besteht aus Polypropylen. Das im Flockkugelkopf verwendete Nylon weist eine gute Beständigkeit gegenüber dem im Adhäsiv enthaltenen Lösungsmittel auf. Der Flockkugeldurchmesser beträgt ca. 3 mm. Die feinen Nylonfasern sind mit einem Polyurethankleber an der Pinselspitze befestigt. Auch der Kleber ist gegenüber den anzuwendenden Zusammensetzungen chemisch inert.

Der erfindungsgemäße schwingende Applikationspinsel benutzt den oben beschriebenen Mikropinsel als Pinselspitze, die auf ein Handstück, wie in Figur 1 angegeben, aufgesteckt wird. Die eingestellte Schwingungsfrequenz beträgt 135 Hz. Dieser Wert ist ungefähr halb so groß wie die Schwingung einer schallbetriebenen Zahnbürste.

Durch den Umstand, dass die gleiche Applikationsspitze, die das Adhäsiv in Kontakt mit der Zahnsubstanz bringt, sowohl in manueller Anwendung als auch in maschineller Anwendung untersucht wurde, gibt ein Vergleich der erzielten Ergebnisse direkt die Wirkung der eingestellten Schwingungsfrequenz auf die Haftwerte wieder.

Die Untersuchungen der Haftkraft an Rinderdentin sind in der dentalen Forschung ein Standardverfahren, um Haftwerte zu ermitteln. Obwohl das Rinderdentin strukturell und morphologisch unterschiedlich zum menschlichen Dentin ist und bei in-vitro Untersuchungen kein nach außen gerichteter Pulpendruck an der Zahnoberfläche existiert, liefern die Werte doch einen verlässlichen Fingerzeig auf die Leistungsfähigkeit des Haftsystems, wenn es später am Menschen angewendet wird.

Mit dem Einwegpinsel wird drucklos auf die freiliegende Dentinoberfläche aufgetragen ohne einzuarbeiten. Man lässt das Adhäsiv 20 sec. auf das Dentin einwirken, verbläst danach mit einem Luftbläser überschüssiges Adhäsiv und härtet die Zusammensetzung entsprechend der Gebrauchsanweisung. Anschließend wird ein Silikonring ohne die inhibierte Schicht des Bonds zu entfernen auf die behandelte Dentinoberfläche mit aufgelegt. Der Silikonring hat einen Innendurchmesser von 5 mm und eine Höhe von 3 mm. In die Mulde des Silikonringes wird schließlich das Füllungskomposit eingebracht und mittels Dentalstopfer luftblasenfrei verdichtet. Anschließend wird das Komposit gemäß Gebrauchsanweisung lichtgehärtet und 24 h im 37°C Wasserdampfbad gelagert. Anschließend wird der Silikonring entfernt und der aufgeklebte Probenkörper in einem transversalen Scherhaftungsversuch vom Dentin abgeschert. Um die natürliche Schwankung der Güte des verwendeten Rinderdentins auszugleichen werden 10 Proben in dieser Weise hergestellt und untersucht.

In gleicher Weise werden 10 Proben unter Anwendung eines Mikropinsels sowie des Vibrationspinsels erstellt. Im Unterschied zum beschriebenen Verfahren wird allerdings mit dem Mikropinsel 20 sec. manuell in das Dentin eingearbeitet. Im Fall des Vibrationspinsels wird zum 20 sekündigen Einarbeiten die Vibrationsfunktion des Pinsels eingeschaltet.

Es ist in jedem Fall darauf zu achten, dass keine überstehende Nässe vorliegt, in der sich das Adhäsiv verteilt und verdünnt. Diese muss gegebenenfalls im Vorfeld mit ölfreier Druckluft vertrieben werden, ohne das Dentin auszutrocknen.

Die Versuche wurden von drei unterschiedlichen Personen durchgeführt. Zusätzlich wurde in einer weiteren Testreihe eine Reduzierung der Anwendungszeit bei Einsatz des Schwingungspinsels studiert.

Tabelle 1 gibt die Ergebnisse unserer Versuche wieder. Die angegebenen Zahlenwerte entsprechen der erzielten Haftkraft in MPa. In Klammern sind die Standardabweichungen der Messwerte angegeben.

**Tabelle 1**

| | **Scherhaftung [Mpa]** | | |
|---|---|---|---|
| | Prüfer 1 | Prüfer 2 | Prüfer 3 |
| **Einwegpinsel** | 8,6 (s = 7,6) | 5,5 (s = 4,6) | 11,3 (s = 5,4) |
| **Mikropinsel** | 13,1 (s = 4,2) | 11,9 (s = 5,1) | 9,1 (s = 5,2) |
| **Schwingungspinsel** | 15,0 (s = 3,1) | 15,6 (s = 2,8) | 14,8 (s = 2,5) |
| **Schwingungspinsel t = 10 sec.** | 12,8 (s = 2,5) | 13,4 (s = 3,0) | 12,4 (s = 2,9) |

## Patentansprüche

1. Schwingender Applikationspinsel zum Auftragen flüssiger, dentaler Materialien an Zahnhartsubstanz, **dadurch gekennzeichnet, dass** der Pinsel in einem Schallfrequenzbereich von 20 bis 10 000 Herz, vorzugsweise in einem Bereich von 80 bis 500 Herz, schwingt.

2. Schwingender Applikationspinsel nach Anspruch 1, **dadurch gekennzeichnet, dass** die flüssigen, dentalen Materialien Bondingmaterialien sind.

3. Schwingender Applikationspinsel nach Anspruch 1, **dadurch gekennzeichnet, dass** die flüssigen, dentalen Materialien Zahnlacke zur Versiegelung, Kavitätenreiniger sowie Fluoridlacke zur Kariesprophylaxe und zur Desensibilisierung sind.

4. Schwingender Applikationspinsel zum Auftragen flüssiger, dentaler Materialien an Zahnhartsubstanz nach einem der vorangehenden Ansprüche, **dadurch gekennzeichnet, dass** der schwingende Applikationspinsel aus einem Handstück und einem austauschbaren Applikationskopf besteht.

5. Schwingender Applikationspinsel zum Auftragen flüssiger, dentaler Materialien an Zahnhartsubstanz nach Anspruch 4, **dadurch gekennzeichnet, dass** die Spitze des Applikationskopfs aus einem weichen Material zur Aufnahme von Flüssigkeit besteht.

6. Schwingender Applikationspinsel zum Auftragen flüssiger, dentaler Materialien an Zahnhartsubstanz nach Anspruch 5, **dadurch gekennzeichnet, dass** das weiche Material zur Aufnahme von Flüssigkeit Mikrofasern, Kunststofffasern, Schaumstoff oder Filz ist.

7. Schwingender Applikationspinsel zum Auftragen flüssiger, dentaler Materialien an Zahnhartsubstanz nach Anspruch 4, **dadurch gekennzeichnet, dass** der Pinselkopf nicht weiter als 5 cm vom Handstück entfernt liegt.

8. Verwendung eines schwingenden Applikationspinsels wie in Anspruch 1 definiert zum Herstellen eines dentalen Adhäsivverbundes.

9. Anwendung des schwingender Applikationspinsel nach Anspruch 2, **dadurch gekennzeichnet, dass** der Auftrag des flüssigen dentalen Bondingmaterials 10 Sekunden beträgt.

10. Verwendung eines schwingenden Applikationspinsels wie in Anspruch 1 definiert zum Herstellen einer Lackschicht zur Versiegelung, einer Lackschicht zur Kariesprophylaxe, einer Lackschicht zur Desensibilisierung sowie zum Auftragen einer Kavitätenreinigungslösung.
